Europäisches Patentamt

European Patent Office

Office européen des brevets

(11) Publication number: **0 321 688**
**A2**

# EUROPEAN PATENT APPLICATION

(21) Application number: **88118514.4**

(51) Int. Cl.⁴: **C04B 14/20**

(22) Date of filing: **07.11.88**

(30) Priority: **20.11.87 US 123468**

(43) Date of publication of application:
**28.06.89 Bulletin 89/26**

(84) Designated Contracting States:
**BE DE FR GB IT NL**

(71) Applicant: **HERCULES INCORPORATED**
**Hercules Plaza**
**Wilmington Delaware 19894(US)**

(72) Inventor: **Brungardt, Clement L.**
**14 Janes Lane**
**Oxford Pennsylvania 19363(US)**
Inventor: **Rush, Pamela K.**
**151 E. Evergreen Street**
**West Grove Pennsylvania 19390(US)**

(74) Representative: **Lederer, Franz, Dr. et al**
**Van der Werth, Lederer & Riederer**
**Patentanwälte Lucile-Grahn-Strasse 22**
**D-8000 München 80(DE)**

(54) **Non-dispersible vermiculite products.**

(57) A process for improving the water resistance of shaped articles formed by removing the water from an aqueous dispersion of vermiculite lamellae containing a cationic polyamine or an anionic polyacrylamide, and the shaped articles so formed, are disclosed.

EP 0 321 688 A2

# NON-DISPERSIBLE VERMICULITE PRODUCTS

This invention concerns products comprising vermiculite having improved structural stability in the presence of water.

It is known that vermiculite ore, a type of layer mineral (and other layer-silicate minerals containing vermiculite layers, e.g., hydrobiotite or chlorite vermiculite), can be delaminated and then sheared to form an aqueous dispersion of tiny particles or platelets of vermiculite known as vermiculite lamellae. It is also known that such dispersions of vermiculite lamellae can be used to fabricate shaped articles or products such as paper, sheets, films, rigid foams or composites with other fibrous materials.

For example, vermiculite ore can be heated to temperatures in excess of 1000° F to exfoliate or expand vermiculite ore particles followed by dispersing the particles in water and then mechanically shearing the particles to the desired size. Such a process is described in U.S. Patents 4,486,235 and 4,271,228.

Alternatively, vermiculite ore can be contacted with a solution of hydrogen peroxide, which swells the vermiculite ore particles, and the swollen particles can be mechanically sheared to platelets or lamellae of a desired size. Such a process is described in U.S. Patent 4,486,235.

In another process for producing dispersions of vermiculite lamellae, described in U.S. Patents 4,608,303 and 3,325,340 and British Patent Specification 1,593,382, aqueous suspensions of swollen vermiculite ore particles are prepared by substituting monovalent inorganic cations and/or organo cations for exchangeable cations retained by the ore, followed by aqueous washing to effect macroscopic ore particle swelling. The swollen ore particles are then mechanically sheared to delaminate the vermiculite particulite structure and produce an aqueous dispersion of vermiculite lamellae.

Other processes for delaminating vermiculite ore and making useful product from them are described in U.S. Patent Nos. 4,472,478; 3,791,969; 3,434,917; and G.B. Patent Nos. 2,007,153; 1,585,104; 1,119,305 and 1,076,786.

The term "vermiculite" refers to all layer minerals known as vermiculite in mineralogical or commercial contexts, and includes minerals consisting wholly or largely of vermiculite, including minerals of a mixed-layer type (phyllosilicates) that contain vermiculite layers as a constituent (such as hydrobiotites and chlorite-vermiculites) and that can be delaminated in the same way as vermiculite. While vermiculite is the preferred layer mineral, other layer minerals may be delaminated, including montmorillonite, kaolinite and clays comprising sepiolite, kaolinite, and other layer silicate minerals that can be delaminated to produce lamellae or plate-like particles.

Vermiculite lamellae or platelets have a particle size typically less than 200 microns, preferably less than 50 microns, have a thickness dimension that is small compared to the other two dimensions, and have an "aspect ratio" (i.e., length or breadth divided by thickness) of at least 10, preferably at least 100 and more preferably at least 1,000, for example, 10,000.

Articles composed wholly of vermiculite ore particles or composites comprising vermiculite ore particles possess a degree of structural integrity and such useful properties as high heat resistance making them particularly suited for use, for example, as thermal insulation materials, fireproof covering and packaging material and refractory facing materials.

Notwithstanding such advantageous and useful properties, however, commercial uses of vermiculite articles have been limited by their poor resistance to water; such articles tend to disintegrate after prolonged immersion. Known methods to maintain the structural integrity of the vermiculite lamellae maintained in aqueous media over long periods of time typically use additives for dispersions of vermiculite lamellae that are known to increase wet-strength, or incorporate such wet-strength improvers into articles formed from the vermiculite lamellae. These methods include post-fabrication treatment of such articles with ammonia vapor or the vapor of an organo amine compound, or with aqueous solutions of electrolytes. Other methods include treatment of dispersions of vermiculite lamellae with solutions of inorganic ions or a source of ammonia or ammonia ions, preferably urea, or the incorporation of up to 20% of a urea-formaldehyde or melamine-formaldehyde resin into a dispersion of vermiculite lamellae as disclosed in U.S. Patent 4,485,203.

Such methods, however, have been found to be less then satisfactory as they either involve tedious and expensive post-treatment, or require the incorporation of inorganic ions or electrolytes that reduce wet strength properties in the presence of exchangeable or competing ions, or the incorporation of relatively large quantities of resinous materials, which often degrade the desirable high temperature properties of vermiculite articles.

There is therefore a need for an improved process for producing shaped vermiculite articles having

2

excellent resistance to water dispersibility that avoids those undesirable aspects of the known processes.

According to the invention, a process for improving the structural stability in the presence of water of shaped articles formed by removing the water from an aqueous dispersion of vermiculite lamellae, by first incorporating in the dispersion a polymeric compound, is characterized in that the polymeric compound is a cationic polyamine or an anionic polyacrylamide.

The shaped vermiculite articles formed by the process according to the invention have excellent resistance to water. It is believed that the cationic polyamines or anionic polyacrylamides are absorbed or adsorbed by the vermiculite lamellae by electrostatic forces to form complete or partial coatings, and are retained on the vermiculite mineral surface in the finished shaped articles.

In general, any conventional cationic polyamine compound disclosed in the prior art is useful in this invention. Examples of such compounds which are preferred include polyquaternary ammonium salts such as poly(dimethyldiallylammonium chloride) analogues commercially available as Kymene® 2064 and Calgon 261 from Hercules Incorporated and Calgon Corporation, respectively. Other examples of polyquaternary ammonium salts include poly(vinylbenzyltrimethylammonium chloride) available under the Dow QX line of compounds from Dow Chemical Company; azetidinium ion substituted polyamides and polyamines available as Kymene 552 H and Kymene 367, respectively, from Hercules Incorporated; methylbis-(3-aminopropylamine)co-polyurea-polyoxamide-epichlorohydrin and methylbis-(3-aminopropylamine)co-polyamide-polyoxamide-epichlorohydrin, both available as PMC D-45 and PMC D-46, respectively, from Hercules Incorporated; quaternary amine substituted acrylamide polymer available as Reten® 1232 from Hercules Incorporated; and, polymeric cationic aliphatic amides derived from adipic acid and diethylene triamine available as Reten 304 and Betz 1275 from Hercules Incorporated and Betz Laboratories, Inc., respectively.

Examples of preferred anionic polyacrylamide compounds useful in this invention include those commercially available under the said trademark Reten from Hercules Incorporated, particularly Reten 521, 523 and 827; those available under the Polyfloc or Separans line marketed by Dow Chemical Company under the formulas Dowell M-144, Dowell M-172 and Dowell M-173; Cyflocs marketed by American Cyanamid as formulas 4000, 4010, 4020 and 4500; Puriflocs manufactured by Dow Chemical Corporation; those available under the Nalcolyte series of anionics manufactured by Nalco Chemical Company; and, Sumifloc FA available from Sumitomo Chemical Company; of which the more highly anionic compounds are most preferred, e.g., Reten® 521 and 523, Dowell M-144, or Cyfloc 4000.

The cationic polyamine, or anionic polyacrylamide compound can be incorporated into the dispersion of vermiculite lamellae at any stage during the production or use thereof. Typically, the compound is most conveniently added to the post-formed dispersion of vermiculite lamellae prior to the fabrication of shaped articles therefrom. However, if desirable, the compound can alternatively be incorporated into a suspension of expanded, exfoliated or swollen ore particles prior to shearing and delamination of the particles to produce lamellae of a desired size.

The amount of cationic polyamine, or anionic polyacrylamide compound incorporated into the dispersion of vermiculite lamallae will range generally from about 0.01% to about 50% by weight, preferably from about 0.1% to about 4% by weight, based upon the dry weight of vermiculite in the dispersion. Total solids content of dispersions of vermiculite lamellae useful in this invention can range generally from about 0.1% to about 70% by weight dry vermiculite, preferably from about 2% to about 35% by weight. The amount of cationic or anionic compound to be employed can be influenced by such factors as the specific compound employed, the total solids content of dispersion and the level of water non-dispersibility desired in the shaped articles manufactured from the dispersions. Although the amount of cationic or anionic compound employed may range outside of those levels described, in general, amounts of about 2% or less have been found to be adequate to achieve the desired level of water non-dispersibility in finished articles, with amounts greater than about 2% producing no significant advantage in effecting water nondispersibility.

Depending on the charge density of the cationic or anionic compound employed, whether it be highly cationic or anionic or partially so, such compound can be added directly to dispersions of vermiculite lamellae in amounts and at such a rate that the dispersion is not immediately flocculated. If desired, a deflocculating agent may be employed in the dispersion before the incorporation of the compound. Of course, the compound may be added as a solution in a suitable solvent to the dispersion of vermiculite lamellae should this route prove to be more convenient to the manufacture. In any event, the method of addition of the compound to the dispersion of vermiculite lamellae or to the aqueous solution of non-sheared exfoliated or swollen vermiculite ore particles is not critical.

Dispersions of vermiculite lamellae having incorporated therein a cationic or anionic compound in accordance with this invention can be used to manufacture any article comprising vermiculite as disclosed by the prior art, for example, films, coatings, sheets and non-sheet solids composed of in part or substantially wholly vermiculite lamellae, by any method known in the art.

A preferred process for producing the dispersions of vermiculite lamellae used in accordance with this invention is one chosen from those described in U.S. Patents 4,608,303 and 3,325,340, and British Patent Specification 1,593,382 already referred to, in which monovalent inorganic cations and/or organo cations are substituted for exchangeable cations retained by the ore and an aqueous washing step swells the macroscopic ore particles. The swollen ore particles are then mechanically sheared to delaminate the vermiculite particulite structure and produce an aqueous dispersion of vermiculite lamellae.

Preferred organo cations known from prior art to effect vermiculite ore particle swelling invention are diallyldimethylammonium, diallylammonium, allyldimethylsulfonium, n-butylammonium, iso-butylammonium, propylammonium, isoamylammonium, crotyltriethylammonium, methacryloxyethyltrimethylammonium, 3-ac-ryloxyneopentyltrimethylammonium, 2-methacryloxyethyltertiarybutylammonium, methacrylamidopropyl-trimethylammonium, acrylamidopropyltrimethylammonium, butenyltrimethylammonium, vinylpyridinium ions such as N-methyl-2-vinylpyridinium, vinylbenzyldimethylsulfonium, vinylbenzyltrimethylammonium, 2,3-epoxypropyltrimethylammonium, triethylvinylphosphonium, tributylvinylphosphonium, -ammonium- -butyrolactone, glycidyltrimethylammonium, 1-methyl-1-tertiarybutylaziridinium, and 1-ethyl-1,2,-3-trimethylazetidinum.

Of those preferred organo cations capable of swelling vermiculite ore particles, the most preferred are alkyl-ammonium compounds having at least 3 carbon atoms in at least one alkyl group, especially diallyldimethylammonium, and useful in amounts ranging from about 50% to about 200% by weight based on the amount of vermiculite present in the aqueous suspension.

Other materials may be added to dispersions of vermiculite lamellae produced in accordance with this invention, depending on the particular properties and end uses contemplated of articles manufactured therefrom. For example, continuous (filamentary), discontinuous (chopped or staple), or agglomerates of carbon (graphite), glass, boron, silica or ceramic type fibers can be impregnated with or incorporated into dispersions of vermiculite lamellae in accordance with this invention to prepare fibrous vermiculite composite structures having excellent water non-dispersibility.

The following examples more fully illustrate preferred embodiments of the present invention.

EXAMPLE 1

This example illustrates the preparation of water non-dispersible films from dispersions of vermiculite lamellae having incorporated therein, preferred cationic polyamines or anionic polyacrylamides in accordance with the instant invention.

An aqueous dispersion of vermiculite lamellae is prepared by first digesting 15 weight percent Grade 4 vermiculite ore particles (ASTM Material Designation C-516) in a saturated sodium chloride solution at reflux for 2 hours, then cooling the resulting suspension to room temperature and filtering. Excess salts are then removed from the filtrate by washing with distilled water.

594 grams of the sodium exchanged vermiculite ore prepared above is digested with agitation in 1.1 liters of 2 molar diallyldimethylammonium chloride solution at reflux for 8 hours, then cooled to room temperature. After washing and agitating 4 times with 1.1 liters of distilled water, ultimately resulting in a 54 weight % solids suspension of exfoliated or swollen vermiculite ore particles, a shearing action is then applied which results in an aqueous dispersion of vermiculite lamellae.

Portions of the indicated cationic polyamine, or anionic polyacrylamide compounds are then added to the dispersion of vermiculite lamellae in the respective amounts indicated in Table I below. After a thorough mixing of each compound in the vermiculite lamellae dispersion, a film of each is cast and allowed to dry over a three day period, then cured at 80°C for 1 hour. A 1"x 1" sample of each film is then placed in room temperature and boiling water to check for water dispersibility and the respective results recorded in Table 1.

As demonstrated by the results in Table 1, a sample of vermiculite sheet material prepared from vermiculite lamellae containing no cationic polyamine or anionic polyacrylamide in accordance with this invention is observed to distintegrate after exposure to room temperature water for less then one hour, and after exposure to boiling water for less than one-half hour.

TABLE 1

| Compound | *Weight % Addition | Water Non-Dispersibility | |
| --- | --- | --- | --- |
| | | Room Temperature (hours) | Boiling (hours) |
| Blank | 0 | 1 | .5 |
| Kymene® 2064 | 2 | 24 | 1 |
| Kymene 557H | 2 | 24 | 1 |
| Kymene 367 | 2 | 24 | 1 |
| PMC D-45 | 2 | 24 | 1 |
| Calgon 261 | 2 | 24 | 1 |
| Reten® 304 | 2 | 24 | 1 |
| Reten 1232 | 2 | 1 | 1 |
| Reten 521 | 2 | 1 | 1 |
| Reten 523 | 2 | 1 | 1 |
| Reten 827 | 2 | 1 | 1 |

*based on percent vermiculite present.

Claims

1. A process for improving the structural stability in the presence of water of shaped articles formed by removing the water from an aqueous dispersion of vermiculite lamellae, by first incorporating in the dispersion a polymeric compound, characterized in that the polymeric compound is a cationic polyamine or an anionic polyacrylamide in an amount of from about 0.01% to about 50% by weight, based on the dry weight of vermiculite in the dispersion.

2. A process for improving the structural stability of shaped articles as claimed in claim 1, further characterized in that the amount of the polymeric compound is from about 0.1% to about 2% by weight, based upon the dry weight of vermiculite in the dispersion.

3. A process for improving the structural stability of shaped articles as claimed in claim 1 or 2, further characterized in that the polymeric compound is a polyquaternary ammonium salt, a quaternary amine-substituted acrylamide polymer, a polymeric cationic aliphatic amide, or a highly anionic polyacrylamide.

4. A process for improving the structural stability of shaped articles as claimed in claim 1, 2, or 3, further characterized in that the amount of total solids in the dispersion is from about 0.1% to about 70% by weight of dry vermiculite.

5. A process for improving the structural stability of shaped articles as claimed in claim 4, further characterized in that the amount of total solids in the dispersion is from about 2% to about 35%.

6. A shaped article formed by removing the water from an aqueous dispersion of vermiculite lamellae made by the process as claimed in any of the preceding claims, characterized in that the cationic polyamine or anionic polyacrylamide is absorbed or adsorbed by the vermiculite lamellae and forms a coating on the vermiculite surface of the article.